# EUROPÄISCHE PATENTSCHRIFT

(11) **EP 3 428 023 B1**
(45) Veröffentlichungstag und Bekanntmachung des Hinweises auf die Patenterteilung: **19.06.2019**
(21) Anmeldenummer: 18173356.9
(22) Anmeldetag: 18.05.2018
(51) Int. Cl.: B60T 13/14, B60T 8/36, B60T 8/48, B60T 13/68

(54) **HYDRAULISCHE FREMDKRAFTBREMSANLAGE UND VERFAHREN ZUR ABS-STEUERUNG**
HYDRAULIC BRAKING SYSTEM AND METHOD FOR ABS CONTROL
INSTALLATION DE FREIN À FORCE EXTÉRIEURE HYDRAULIQUE ET PROCÉDÉ DE COMMANDE D'ABS

(30) Priorität: 11.07.2017 DE 102017006540; 04.08.2017 DE 102017007409
(43) Veröffentlichungstag der Anmeldung: 16.01.2019
(73) Patentinhaber: WABCO GmbH, 30453 Hannover (DE)
(72) Erfinder: BRÜTT, Mirko, 30952 Ronnenberg (DE); HAVERKAMP, Michael, Hannover (DE)

(56) Entgegenhaltungen:
- WO-A1-92/18361
- DE-A1- 2 933 536
- DE-A1-102015 015 472

## Beschreibung

Die Erfindung betrifft eine hydraulische Fremdkraftbremsanlage eines Radfahrzeugs, mit mindestens einer Hauptbremsleitung, in die mittels eines über ein Bremspedal betätigbaren Bremsventils ein Soll-Bremsdruck einsteuerbar ist, und von der mindestens eine zu einer Betätigungseinheit wenigstens einer Radbremse führende Achs- oder Radbremsleitung abzweigt, sowie mit einer Ventilanordnung einer ABS-Steuerung, die jeweils ein zwischen der Hauptbremsleitung und der jeweiligen Achs- oder Radbremsleitung angeordnetes, hydraulisch druckgesteuertes Einlassventil und ein zwischen der jeweiligen Achs- oder Radbremsleitung sowie einer drucklosen Rücklaufleitung angeordnetes, hydraulisch druckgesteuertes Auslassventil sowie mindestens ein jedem Ein- und Auslassventil vorgeschaltetes, elektromagnetisch betätigbares Vorsteuerventil aufweist, wobei mindestens ein Temperatursensor zur Erfassung der Öltemperatur und mindestens ein Heizelement zur Aufheizung von Hydrauliköl vorgesehen ist, und wobei die Ein- und Auslassventile sowie die Vorsteuerventile der ABS-Steuerung pro Fahrzeugeinheit oder pro Fahrzeugachse jeweils in einem ABS-Modulatorblock zusammengefasst sind. Die Erfindung betrifft außerdem ein Verfahren zur ABS-Steuerung einer derartigen hydraulischen Fremdkraftbremsanlage.

Während Personenkraftwagen und leichte Nutzfahrzeuge üblicherweise eine pedalkraftgestützte hydraulische Bremsanlage sowie schwerere Nutzfahrzeuge eine fremdkraftgestützte pneumatische Bremsanlage aufweisen, können Radfahrzeuge, die, wie Baumaschinen und Ackerschlepper, für einen Off-Highway-Einsatz vorgesehen sind, mit einer fremdkraftgestützten hydraulischen Bremsanlage ausgerüstet sein, die hier als hydraulische Fremdkraftbremsanlage bezeichnet wird. Aufgrund der erforderlichen hohen Bremskräfte weisen die Betätigungseinheiten der Radbremsen, wie Radbremszylinder und Bremssättel, bei derartigen Radfahrzeugen ein relativ großes Verdrängungsvolumen auf, das nur mit einer fremdkraftgestützten Bremsanlage gefördert werden kann. Da Baumaschinen und Ackerschlepper üblicherweise über hydraulische Arbeitsgeräte verfügen oder sogar einen hydrostatischen Antrieb aufweisen, kann eine hydraulische Fremdkraftbremsanlage vorteilhaft die ohnehin vorhandene hydraulische Druckversorgungsanlage nutzen.

In der DE 195 46 056 A1 und der DE 198 59 737 A1 sind hydraulische Fremdkraftbremsanlagen eines Kraftfahrzeugs beschrieben, die jeweils zwei Bremskreise, eine Ventilanordnung einer ABS-Steuerung und eine Ventilanordnung einer ASR-Steuerung umfassen. Die Einlassventile und die Auslassventile der Ventilanordnung der ABS-Steuerung sind dort jeweils als 2/2-Wege-Magnetschaltventile ausgebildet. Bei der Ventilanordnung der ABS-Steuerung gemäß der DE 195 46 056 A1 sind Sicherheitsventile als parallel zu den Einlassventilen angeordnete Rückschlagventile ausgebildet. Dagegen weist die Ventilanordnung der ABS-Steuerung gemäß der DE 198 59 737 A1 hierzu in die Einlassventile integrierte Rückschlagventile beziehungsweise Rückschlagventilfunktionen auf.

Diese bekannten Fremdkraftbremsanlagen sind aufgrund der unmittelbar elektromagnetisch betätigbaren Ein- und Auslassventile der ABS-Steuerung nur für Personenkraftwagen und leichtere Nutzfahrzeuge geeignet. Bei größeren und schwereren Nutzfahrzeugen, insbesondere bei für einen Off-Highway-Einsatz vorgesehenen Baumaschinen und Ackerschleppern, sind die Betätigungseinheiten der Radbremsen, wie Radbremszylinder und Bremssättel, zur Erzeugung der erforderlichen Bremskräfte derart groß dimensioniert, dass das bei Bremsvorgängen in jeder der Betätigungseinheiten zu bewegende Verdrängungsvolumen des Hydrauliköls oft mindestens 15 cm³ beträgt. Zur Durchschaltung und Absperrung derartig großer Verdrängungsvolumina wären relativ große Magnetschaltventile mit sehr hoher Stromaufnahme der entsprechend groß dimensionierten Magnetspulen erforderlich. Aufgrund der hohen Induktivität dieser Magnetspulen würden entsprechend ausgeführte Ein- und Auslassventile durch den langsamen Auf- und Abbau der Magnetfelder entsprechend lange Schaltzeiten aufweisen und nur eine niedrige ABS-Regelfrequenz ermöglichen.

Zur Vermeidung dieses Nachteils ist in der DE 10 2015 014 205 A1 eine hydraulische Fremdkraftbremsanlage vorgestellt worden, bei der die Ein- und Auslassventile der ABS-Steuerung als hydraulisch druckgesteuerte Schaltventile ausgebildet sind. Zur Ansteuerung ist den Ein- und Auslassventilen jeweils entweder ein 3/2-Wege-Magnetschaltventil oder zwei 2/2-Wege-Magnetschaltventile zugeordnet, über welche die Steuereingänge der Ein- und Auslassventile wechselweise mit einer druckführenden Steuerdruckleitung oder mit einer drucklosen Rücklaufleitung verbindbar sind. Die Steuerdruckleitungen zweigen von einer Steuerdruck-Hauptleitung ab, die an eine einen variablen Bremsdruck führende Hauptbremsleitung angeschlossen ist.

Da die Schaltgeschwindigkeit der Ein- und Auslassventile der ABS-Steuerung und damit die mögliche Höhe der ABS-Regelfrequenz mit sinkendem Schaltdruck abnimmt, ist in der nicht vorveröffentlichten DE 10 2015 015 472.9 der Anmelderin eine hydraulische Fremdkraftbremsanlage vorgeschlagen worden, bei der die Ein- und Auslassventile der ABS-Steuerung als hydraulisch oder pneumatisch druckgesteuerte Schaltventile ausgebildet sind. Damit die ABS-Steuerung von dem über das Bremsventil in die Hauptbremsleitung eingesteuerten Bremsdruck unabhängig ist, sind die Steuerdruckleitungen über eine Steuerdruck-Hauptleitung an eine Hauptdruckleitung einer hydraulischen oder pneumatischen Druckversorgungsanlage angeschlossen.

Die Schaltgeschwindigkeit der Ein- und Auslassventile sowie der Vorsteuerventile der ABS-Steuerung und damit die mögliche Höhe der ABS-Regelfrequenz sind bei hydraulischer Ansteuerung jedoch auch von der temperaturabhängigen Viskosität des verwendeten Hydrauliköls abhängig. Daher wird in der DE 10 2015 015 472.9 auch vorgeschlagen, einen Temperatursensor zur Erfassung der Öltemperatur und ein Heizelement zur Aufheizung des verfügbaren Hydrauliköls vorzusehen. Der Temperatursensor und das Heizelement sind dort bevorzugt an oder in einem Speicherbehälter der hydraulischen Druckversorgungsanlage angeordnet.

Zur Reduzierung des Herstellungs- und Montageaufwands sind die Ein- und Auslassventile sowie die Vorsteuerventile der ABS-Steuerung üblicherweise entweder pro Fahrzeugeinheit (Zugfahrzeug, Anhänger) oder pro Fahrzeugachse (Vorderachse, Hinterachse) jeweils in einem ABS-Modulatorblock zusammengefasst. Zum Schutz vor schädlichen Umwelteinflüssen und mechanischer Beschädigung sind die ABS-Modulatorblöcke möglichst nah an den Betätigungseinheiten der Radbremsen an geeigneter Stelle am Fahrzeugrahmen befestigt. Hierdurch ergeben sich zwangsläufig größere Abstände zwischen der hydraulischen Druckversorgungsanlage und den ABS-Modulatorblöcken, die mittels entsprechend langen Steuerdruck-Hauptleitungen überbrückt werden. Bedarfsweise in der Druckversorgungsanlage aufgeheiztes Hydrauliköl kühlt sich daher bei kalten und feuchten Witterungsbedingungen auf dem Weg zu den ABS-Modulatorblöcken durch Wärmeleitung und Konvektion wieder ab, so dass der gewünschte Effekt, nämlich durch eine niedrige Viskosität des Hydrauliköls ein schnelles Ansprechverhalten der Ein- und Auslassventile der ABS-Steuerung zu erreichen, ausbleiben oder zumindest stark abgeschwächt werden kann.

Der vorliegenden Erfindung liegt daher die Aufgabe zu Grunde, eine hydraulische Fremdkraftbremsanlage eines Radfahrzeugs der eingangs genannten Bauart mit verbesserten Betriebseigenschaften der ABS-Steuerung vorzuschlagen. Außerdem soll ein Verfahren zur ABS-Steuerung einer derartigen hydraulischen Fremdkraftbremsanlage vorgestellt werden.

Die Lösung dieser Aufgabe wird mit einer Fremdkraftbremsanlage erreicht, welche die Merkmale des Anspruchs 1 aufweist. Zur Lösung der verfahrensbezogenen Aufgabe dient ein Verfahren mit den Merkmalen des unabhängigen Verfahrensanspruchs. Vorteilhafte Weiterbildungen sind in den jeweils abhängigen Ansprüchen definiert.

Die Erfindung betrifft demnach eine hydraulische Fremdkraftbremsanlage eines Radfahrzeugs, mit mindestens einer Hauptbremsleitung, in die mittels eines über ein Bremspedal betätigbaren Bremsventils ein Soll-Bremsdruck einsteuerbar ist, und von der mindestens eine zu einer Betätigungseinheit wenigstens einer Radbremse führende Achs- oder Radbremsleitung abzweigt, sowie mit einer Ventilanordnung einer ABS-Steuerung, die jeweils ein zwischen der Hauptbremsleitung und der jeweiligen Achs- oder Radbremsleitung angeordnetes, hydraulisch druckgesteuertes Einlassventil und ein zwischen der jeweiligen Achs- oder Radbremsleitung sowie einer drucklosen Rücklaufleitung angeordnetes, hydraulisch druckgesteuertes Auslassventil sowie mindestens ein jedem Ein- und Auslassventil vorgeschaltetes, elektromagnetisch betätigbares Vorsteuerventil aufweist, wobei mindestens ein Temperatursensor zur Erfassung der Öltemperatur und mindestens ein Heizelement zur Aufheizung von Hydrauliköl vorgesehen ist, und wobei die Ein- und Auslassventile sowie die Vorsteuerventile der ABS-Steuerung pro Fahrzeugeinheit oder pro Fahrzeugachse jeweils in einem ABS-Modulatorblock zusammengefasst sind.

Zur Lösung der gestellten Aufgabe ist bei dieser Fremdkraftbremsanlage vorgesehen, dass in jedem ABS-Modulatorblock mindestens ein Temperatursensor zur Erfassung der Öltemperatur und mindestens ein Heizelement zur Aufheizung des lokal zur Steuerung verwendeten Hydrauliköls angeordnet sind. Hierdurch ist es nun möglich, jeweils die lokale Öltemperatur des Hydrauliköls in den radbremsennahen ABS-Modulatorblöcken zu erfassen und das Hydrauliköl bei Bedarf durch die Aktivierung des betreffenden Heizelementes lokal zu erwärmen und dadurch die Viskosität des Hydrauliköls zu reduzieren. Eine mögliche Abkühlung des Hydrauliköls auf dem Weg zwischen einem entfernten Vorratsbehälter und den ABS-Modulatorblöcken wird dadurch mittels Temperaturerhöhung kompensiert.

Da die Schaltgeschwindigkeit der Ein- und Auslassventile und damit die Höhe der ABS-Regelfrequenz weitgehend von der Viskosität des zur Steuerung verwendeten Hydrauliköls abhängt, ist zur Erhöhung der Genauigkeit der Temperaturerfassung und der Wirksamkeit der Aufheizung des Hydrauliköls vorzugsweise vorgesehen, dass der Temperatursensor und das Heizelement innerhalb des jeweiligen ABS-Modulatorblocks nahe an den jeweiligen Vorsteuerventilen angeordnet sind.

Eine weitere Erhöhung der Genauigkeit der Temperaturerfassung und der Wirksamkeit der Aufheizung des Hydrauliköls kann dadurch erreicht werden, dass in mindestens einem ABS-Modulatorblock für jedes Paar von Ein- und Auslassventilen der Achs- oder Radbremsleitungen ein Temperatursensor und ein Heizelement nahe an den zugeordneten Vorsteuerventile angeordnet sind.

Die Wirksamkeit der Aufheizung des zur Steuerung verwendeten Hydrauliköls kann auch dadurch erhöht werden, dass mindestens ein ABS-Modulatorblock zumindest im Bereich der Vorsteuerventile mit einer gegen die Umgebung abschirmenden Wärmeisolierung versehen ist. Durch die Wärmeisolierung wird der Wärmeverlust des Hydrauliköls durch Wärmeleitung und Konvektion in die Umgebung sowie die erforderliche Heizleistung des betreffenden Heizelementes reduziert.

Die Heizelemente sind bevorzugt als elektrische Heizkörper ausgebildet, die jeweils über einen ansteuerbaren elektrischen Schalter beziehungsweise ein Relais wechselweise mit einer elektrischen Energiequelle des Radfahrzeugs verbindbar oder von dieser trennbar sind.

Alternativ dazu kann vorgesehen sein, dass mindestens ein Heizelement als ein elektrischer Heizkörper ausgebildet ist, welcher über einen in einem oder an einem Vorsteuerventil integrierten Bi-Metall-Schalter in Abhängigkeit von der dort herrschenden Temperatur selbststeuernd wechselweise mit einer elektrischen Energiequelle des Radfahrzeugs verbindbar oder von dieser trennbar ist.

Möglich ist jedoch auch, dass die Heizelemente als Öl-Wärmetauscher ausgebildet sind, die jeweils über ein im Zu- oder Rücklauf angeordnetes ansteuerbares Magnetventil wechselweise mit einem Kühlölkreislauf einer Ölpumpe einer hydraulischen Druckversorgungsanlage oder eines Verbrennungsmotors oder eines Fahr- oder Arbeitsgetriebes des Radfahrzeugs verbindbar oder gegenüber diesem absperrbar sind.

Ebenso können die Heizelemente auch als Wasser-Wärmetauscher ausgebildet sein, die jeweils über ein im Zu- oder Rücklauf angeordnetes ansteuerbares Magnetventil wechselweise mit einem Kühlwasserkreislauf eines Verbrennungsmotors des Radfahrzeugs verbindbar oder gegenüber diesem absperrbar sind.

Die Erfindung betrifft auch ein Verfahren zur ABS-Steuerung einer hydraulischen Fremdkraftbremsanlage eines Radfahrzeugs, welche mindestens eine Hauptbremsleitung aufweist, in die mittels eines über ein Bremspedal betätigbaren Bremsventils ein Soll-Bremsdruck einsteuerbar ist, und von der mindestens eine zu einer Betätigungseinheit wenigstens einer Radbremse führende Achs- oder Radbremsleitung abzweigt. Außerdem verfügt diese Fremdkraftbremsanlage über eine Ventilanordnung einer ABS-Steuerung, die jeweils ein zwischen der Hauptbremsleitung und der jeweiligen Achs- oder Radbremsleitung angeordnetes, hydraulisch druckgesteuertes Einlassventil sowie ein zwischen der jeweiligen Achs- oder Radbremsleitung und einer drucklosen Rücklaufleitung angeordnetes, hydraulisch druckgesteuertes Auslassventil aufweist. Weiter weist die Fremdkraftbremsanlage mindestens ein jedem Ein- und Auslassventil vorgeschaltetes, elektromagnetisch betätigbares Vorsteuerventil sowie mindestens einen Temperatursensor zur Erfassung der Öltemperatur und ein Heizelement zur Aufheizung von Hydrauliköl auf.

Zur Lösung der verfahrensbezogenen Aufgabe ist zur Steuerung der hydraulischen Fremdkraftbremsanlage eines Radfahrzeugs vorgesehen, dass mittels mindestens einem nahe an den Vorsteuerventilen wenigstens eines Paares von Ein- und Auslassventilen einer Achs- oder Radbremsleitung angeordneten Temperatursensor die lokale Öltemperatur des zur Ansteuerung der Ein- und Auslassventile verwendeten Hydrauliköls gemessen wird, und dass mindestens ein nahe an denselben Vorsteuerventilen angeordnetes Heizelement dann eingeschaltet wird, wenn die erfasste Öltemperatur einen vorgegebenen Einschaltgrenzwert T_{H_on} erreicht oder unterschritten hat, und dann abgeschaltet wird, wenn die erfasste Öltemperatur einen vorgegebenen Abschaltgrenzwert T_{H_off}, der über dem Einschaltgrenzwert T_{H_on} liegt, erreicht oder überschritten hat.

Die Öltemperatur des zur Ansteuerung der Ein- und Auslassventile verwendeten Hydrauliköls wird somit nahe an den Radbremsen erfasst, und das betreffende Hydrauliköl wird bedarfsweise zur Reduzierung der Viskosität lokal aufgeheizt. Hierdurch wird einerseits die Genauigkeit der Temperaturerfassung des Hydrauliköls erhöht und andererseits die erforderliche Heizleistung zur Aufheizung des Hydrauliköls reduziert.

Zudem ist gemäß einer Weiterbildung dieses Verfahren vorgesehen, dass die ABS-Steuerung deaktiviert wird, wenn die erfasste Öltemperatur T einen vorgegebenen Betriebsgrenzwert T_{ABS_on}, der über einem Mindestgrenzwert T_{ABS_min} zur Erfüllung der gesetzlichen Anforderungen an die ABS-Steuerung (T_{ABS_on} > T_{ABS_min}) und unter dem Einschaltgrenzwert T_{H_on} des Heizelementes liegt (T_{ABS_on} < T_{H_on}), erreicht oder unterschritten hat (T ≤ T_{ABS_on}). Durch den Abstand des Betriebsgrenzwertes T_{ABS_on} von dem Mindestgrenzwert T_{ABS_min} werden mögliche Messungenauigkeiten bei der sensorischen Erfassung der Öltemperatur T und eine mögliche ungleiche Temperaturverteilung innerhalb des jeweiligen ABS-Modulatorblocks berücksichtigt, so dass die ABS-Steuerung im aktivierten Zustand die gesetzlichen Anforderungen sicher erfüllt.

Bei deaktivierter ABS-Steuerung wird vorzugsweise ein optisches und/oder akustisches Warnsignal im Fahrerhaus des Radfahrzeugs ausgegeben, um den Fahrer auf die Nichtverfügbarkeit der ABS-Steuerung hinzuweisen und zu einer vorsichtigeren Fahrweise zu bewegen. Die Ausgabe des Warnsignals kann zum Beispiel durch das permanente oder blinkende Aufleuchten einer entsprechend gekennzeichneten Warnleuchte im Armaturenbrett des Fahrerhauses, durch die Aussendung eines permanenten oder unterbrochenen Warntons über einen Lautsprecher und/oder durch eine schriftliche Information auf einem Display erfolgen.

Zur weiteren Verdeutlichung der Erfindung ist der Beschreibung eine Zeichnung mit einem Ausführungsbeispiel sowie mit Diagrammen beigefügt. In dieser zeigt
Fig. 1 eine hydraulische Fremdkraftbremsanlage mit einer erfindungsgemäßen ABS-Steuerung in einer schematischen Ansicht,
Fig. 2 einen Bremsdruckverlauf einer erfindungsgemäßen ABS-Steuerung der hydraulischen Fremdkraftbremsanlage gemäß Fig. 1 in Form eines Diagramms,
Fig. 3a die temperaturabhängige Viskosität einiger Hydrauliköle in Form eines Diagramms, und
Fig. 3b die temperaturabhängige Viskosität einiger Hydrauliköle in einem vergrößerten Ausschnitt des Diagramms gemäß Fig. 3a.

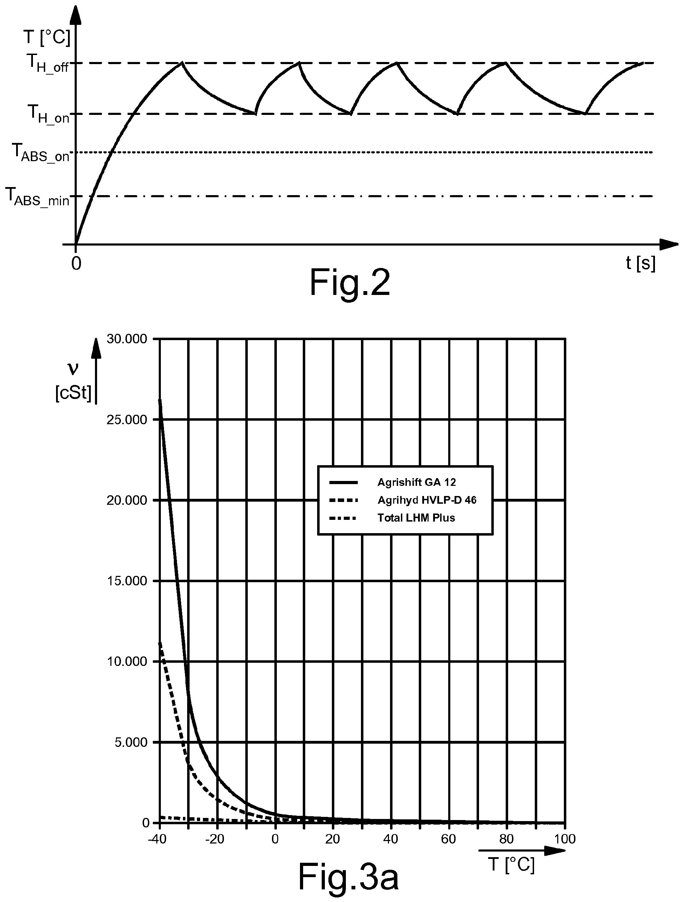

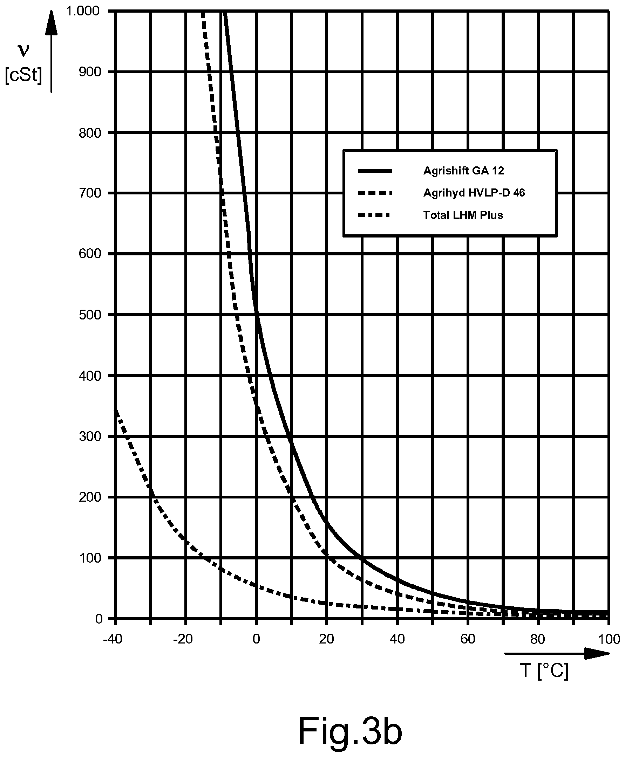

Dem Diagramm von Fig. 3a und dem einen vergrößerten Ausschnitt des Diagramms von Fig. 3a darstellenden Diagramm gemäß Fig. 3b ist zu entnehmen, dass die in Agrarmaschinen, wie Ackerschleppern und Erntemaschinen, als Bremsflüssigkeit, Getriebeöl und Servoöl häufig verwendeten Hydrauliköle Agrishift GA 12 und Agrihyd HVLP-D 46 bei Öltemperaturen T unter 20° C einen starken Anstieg der kinematischen Viskosität v aufweisen. Bei der Verwendung dieser Hydrauliköle als Bremsflüssigkeit in hydraulischen Fremdkraftbremsanlagen, bei denen die Vorsteuerventile sowie die Ein- und Auslassventile einer ABS-Steuerung hydraulisch angesteuert werden, ist es daher sinnvoll, das Hydrauliköl zumindest im Bereich der Vorsteuerventile bedarfsweise, also bei Vorliegen einer niedrigen Öltemperatur, zu erwärmen. Hierdurch wird die kinematische Viskosität v des zur Ansteuerung der Ein- und Auslassventile verwendeten Hydrauliköls reduziert, welches zu kürzeren Schaltzeiten der Ein- und Auslassventile führt und damit eine höhere ABS-Regelfrequenz ermöglicht.

In den Diagrammen von Fig. 3a und Fig. 3b ist zum Vergleich auch der temperaturabhängige Viskositätsverlauf des Hydrauliköls Total LHM Plus eingezeichnet. Dieses speziell für den Einsatz in hydropneumatischen Federungsanlagen und Bremsanlagen bestimmter Personenkraftfahrzeugmodelle entwickelte Hydrauliköl weist bei Öltemperaturen T unter 20° C einen deutlich schwächeren Anstieg der kinematischen Viskosität v auf. Es wird bei Agrarmaschinen jedoch bisher nicht genutzt.

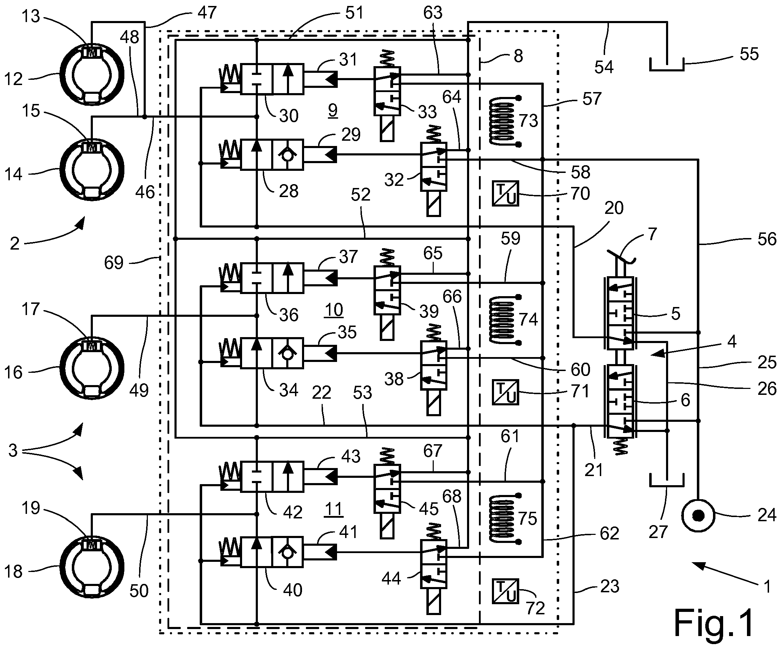

In der schematischen Übersichtsdarstellung von Fig. 1 ist eine hydraulische Fremdkraftbremsanlage 1 eines Radfahrzeugs abgebildet, in der eine erfindungsgemäße Einrichtung zur Erfassung der Öltemperatur T und zur bedarfsweisen Aufheizung des zur Steuerung verwendeten Hydrauliköls vorgesehen ist.

Die hydraulische Fremdkraftbremsanlage 1 weist zwei Bremskreise 2, 3 auf und umfasst ein Bremsventil 4, eine drei Funktionsgruppen 9, 10, 11 aufweisende Ventilanordnung 8 einer ABS-Steuerung und mehrere Betätigungseinheiten 13, 15, 17, 19 von Radbremsen 12, 14, 16, 18 von zwei Fahrzeugachsen des Radfahrzeugs. Die Radbremsen 12, 14, 16, 18 sind vorliegend beispielhaft als Trommelbremsen ausgeführt und die Betätigungseinheiten 13, 15, 17, 19 entsprechend als Radbremszylinder ausgebildet. Über das Bremsventil 4, das zwei 3/3-Wege-Proportionalventile 5, 6 beinhaltet und mittels eines Bremspedals 7 von einem Fahrer betätigbar ist, sind eine erste Hauptbremsleitung 20 des ersten Bremskreises 2 und eine zweite Hauptbremsleitung 21 des zweiten Bremskreises 3 zur dosierten Einsteuerung eines Bremsdruckes jeweils mehr oder weniger gedrosselt mit einer druckführenden Hauptdruckleitung 25 einer Druckölquelle 24 und einer in einen Ölsumpf beziehungsweise Vorratsbehälter 27 führenden drucklosen Rücklaufleitung 26 verbindbar.

Die drei Funktionsgruppen 9, 10, 11 der ABS-Steuerung umfassen jeweils ein Einlassventil 28, 34, 40 und ein Auslassventil 30, 36, 42, die als hydraulisch druckgesteuerte 2/2-Wege-Schaltventile ausgebildet sind, und jeweils ein als 3/2-Wege-Magnetschaltventil ausgebildetes Vorsteuerventil 32, 33; 38, 39; 44, 45 pro Ein- oder Auslassventil 28, 30, 34, 36, 40, 42.

Eine Achsbremsleitung 46 des ersten Bremskreises 2, von der zwei zu den Radbremszylindern 13, 15 der Vorderachse führende Radbremsleitungen 47, 48 abzweigen, ist über das Einlassventil 28 und das Auslassventil 30 der ersten Funktionsgruppe 9 der ABS-Steuerung wechselweise mit der Hauptbremsleitung 20 des ersten Bremskreises 2 oder einer drucklosen Rücklaufleitung 51 verbindbar. Die Rücklaufleitung 51 ist an eine Sammelrücklaufleitung 54 angeschlossen, die in einen Ölsumpf beziehungsweise Vorratsbehälter 55 führt.

Über die Vorsteuerventile 32, 33 sind die Steuereingänge 29, 31 der zugeordneten Einlass- und Auslassventile 28, 30 jeweils wechselweise mit einer druckführenden Steuerdruckleitung 57, 58, die jeweils an eine an die Hauptdruckleitung 25 angeschlossene Haupt-Steuerdruckleitung 56 angeschlossen ist, oder mit einer an die Sammelrücklaufleitung 54 angeschlossenen drucklosen Rücklaufleitung 63, 64 verbindbar.

Die Hauptbremsleitung 21 des zweiten Bremskreises 3 ist in einen ersten Hauptbremsleitungszweig 22 und einen zweiten Hauptbremsleitungszweig 23 verzweigt. Eine erste Radbremsleitung 49 des zweiten Bremskreises 3, die zu dem Radbremszylinder 17 der Radbremse 16 des rechten Fahrzeugrades der Hinterachse führt, ist über das Einlassventil 34 und das Auslassventil 36 der zweiten Funktionsgruppe 10 der ABS-Steuerung wechselweise mit dem ersten Hauptbremsleitungszweig 22 der zweiten Hauptbremsleitung 21 oder einer an die Sammelrücklaufleitung 54 angeschlossenen drucklosen Rücklaufleitung 52 verbindbar.

Über die Vorsteuerventile 38, 39 sind die Steuereingänge 35, 37 der zugeordneten Einlass- und Auslassventile 34, 36 jeweils wechselweise mit einer druckführenden Steuerdruckleitung 59, 60, die jeweils an die Haupt-Steuerdruckleitung 56 angeschlossen ist, oder mit einer an die Sammelrücklaufleitung 54 angeschlossenen drucklosen Rücklaufleitung 65, 66 verbindbar.

Eine zweite Radbremsleitung 50 des zweiten Bremskreises 3, die zu dem Radbremszylinder 19 der Radbremse 18 des linken Fahrzeugrades der Hinterachse führt, ist über das Einlassventil 40 und das Auslassventil 42 der dritten Funktionsgruppe 11 der ABS-Steuerung wechselweise mit dem zweiten Hauptbremsleitungszweig 23 der zweiten Hauptbremsleitung 21 oder einer an die Sammelrücklaufleitung 54 angeschlossenen drucklosen Rücklaufleitung 53 verbindbar.

Über die Vorsteuerventile 44, 45 sind die Steuereingänge 41, 43 der zugeordneten Einlass- und Auslassventile 40, 42 jeweils wechselweise mit einer druckführenden Steuerdruckleitung 61, 62, die jeweils an die Haupt-Steuerdruckleitung 56 angeschlossen ist, oder mit einer an die Sammelrücklaufleitung 54 angeschlossenen drucklosen Rücklaufleitung 67, 68 verbindbar.

Im unbetätigten, also steuerdrucklosen Zustand des jeweiligen Einlassventils 28, 34, 40 ist die betreffende Achs- oder Radbremsleitung 46, 49, 50 mit der zugeordneten Hauptbremsleitung 20, 21 verbunden, wodurch die jeweiligen Radbremsen 12, 14 beziehungsweise die jeweilige Radbremse 16, 18 mit dem Soll-Bremsdruck betätigt werden beziehungsweise betätigt wird. Im betätigten, also mit einem Steuerdruck beaufschlagten Steuereingang 29, 35, 41 des jeweiligen Einlassventils 28, 34, 40 ist die betreffende Achs- oder Radbremsleitung 46, 49, 50 gegenüber der zugeordneten Hauptbremsleitung 20, 21 abgesperrt. Über ein in das jeweilige Einlassventil 28, 34, 40 integriertes Rückschlagventil ist dann jedoch ein Druckabbau in der betreffenden Achs- oder Radbremsleitung 46, 49, 50 über die zugeordnete Hauptbremsleitung 20, 21 und das Bremsventil 4 möglich, welches bei zwischenzeitlich gelöstem Bremspedal 7 und dadurch abgesenktem Soll-Bremsdruck zur Wirkung kommt.

Im unbetätigten, also steuerdrucklosen Zustand des jeweiligen Auslassventils 30, 36, 42 ist die betreffende Achs- oder Radbremsleitung 46, 49, 50 gegenüber der zugeordneten Rücklaufleitung 51, 52, 53 abgesperrt. Im betätigten, also mit einem Steuerdruck beaufschlagten Steuereingang 31, 37, 43 des jeweiligen Auslassventils 30, 36, 42 ist die betreffende Achs- oder Radbremsleitung 46, 49, 50 mit der zugeordneten Rücklaufleitung 51, 52, 53 verbunden, wodurch die zugeordneten Radbremszylinder 13, 15 drucklos und die betreffenden Radbremsen 12, 14 gelöst werden beziehungsweise der zugeordnete Radbremszylinder 17, 19 drucklos und die betreffende Radbremse 16, 18 gelöst wird.

Bei einer ABS-Regelung, bei der die Vorsteuerventile 32, 33; 38, 39; 44, 45 über nicht abgebildete elektrische Steuerleitungen von einer nicht abgebildeten elektronischen ABS-Steuereinheit angesteuert werden, wird durch wechselweises Öffnen und Schließen der jeweiligen Einlassventile 28, 34, 40 und Auslassventile 30, 36, 42 der in der jeweiligen Achs- oder Radbremsleitung 46, 49, 50 herrschende und in den Radbremszylindern 13, 15 der Radbremsen 12, 14 beziehungsweise in dem Radbremszylinder 17, 19 der Radbremse 16, 18 wirksame Bremsdruck derart moduliert, dass ein Blockieren der betreffenden Fahrzeugräder oder des betreffenden Fahrzeugrades verhindert wird, und das Radfahrzeug dadurch brems- und lenkfähig bleibt. Da der Steuerdruck über die Haupt-Steuerdruckleitung 56 an der Hauptdruckleitung 25 abgegriffen wird, die unter einem konstant hohen Öldruck steht, erfolgt die Umschaltung der Ein- und Auslassventile 28, 30; 34, 36; 40, 42 im Rahmen einer ABS-Regelung unabhängig von dem über das Bremsventil 4 in die beiden Hauptdruckleitungen 20, 21 eingesteuerten Soll-Bremsdruck immer gleich schnell.

Vorliegend sind die Ein- und Auslassventile 28, 30; 34, 36; 40, 42 sowie die Vorsteuerventile 32, 33; 38, 39; 44, 45 der drei Funktionsgruppen 9, 10, 11 der ABS-Steuerung in einem ABS-Modulatorblock 69 zusammengefasst, der entfernt von der Druckölquelle 24 an geeigneter Stelle am Fahrzeugrahmen des Radfahrzeugs befestigt ist. Um unabhängig von aktuellen Witterungsbedingungen, insbesondere bei niedriger Umgebungstemperatur, weitgehend gleich schnelle Schaltzeiten der Ein- und Auslassventile 28, 30; 34, 36; 40, 42 und damit eine gleich hohe ABS-Regelfrequenz zu ermöglichen, ist eine Einrichtung zur Erfassung der Öltemperatur T und zur bedarfsweisen Aufheizung des zur Steuerung verwendeten Hydrauliköls vorgesehen.

Zur Erfassung der Öltemperatur T des zur Ansteuerung der Ein- und Auslassventile 28, 30; 34, 36; 40, 42 verwendeten Hydrauliköls ist in jeder Funktionsgruppe 9, 10, 11 der ABS-Steuerung ein Temperatursensor 70, 71, 72 nahe an den betreffenden Vorsteuerventilen 32, 33; 38, 39; 44, 45 angeordnet. Zur bedarfsweisen Aufheizung des zur Ansteuerung der Ein- und Auslassventile 28, 30; 34, 36; 40, 42 verwendeten Hydrauliköls ist in jeder Funktionsgruppe 9, 10, 11 der ABS-Steuerung zudem ein einschaltbares und ausschaltbares Heizelement 73, 74, 75 nahe an den betreffenden Vorsteuerventile 32, 33; 38, 39; 44, 45 angeordnet. Anstelle eines Temperatursensors 70, 71, 72 und eines Heizelementes 73, 74, 75 pro Funktionsgruppe 9, 10, 11 der ABS-Steuerung könnten in dem ABS-Modulatorblock 69 auch nur ein Temperatursensor 71 und ein Heizelement 74 zentral nahe der Vorsteuerventile 32, 33; 38, 39; 44, 45 angeordnet sein, sofern diese baulich dicht beieinander angeordnet sind.

Die Temperatursensoren 70, 71, 72 sind zur Auswertung der erfassten Öltemperaturwerte T über nicht abgebildete Sensorleitungen mit der elektronischen ABS-Steuereinheit verbunden. Die bevorzugt als elektrische Heizkörper ausgebildeten Heizelemente 73, 74, 75 sind beispielsweise über ein Relais mit einer elektrischen Spannungsquelle ein- und ausschaltbar verbunden, welches von der elektronischen ABS-Steuereinheit ansteuerbar ist. Diese Ansteuerung erfolgt in Abhängigkeit von den durch die Temperatursensoren 70, 71, 72 ermittelten Temperaturen. Sofern das erwähnte Relais nicht zur Verfügung steht, können die Heizelemente 73, 74, 75 auch über einen in einem oder an einem Vorsteuerventil 32, 33; 38, 39; 44, 45 integrierten Bi-Metall-Schalter in Abhängigkeit von der dort herrschenden Temperatur selbststeuernd betätigt werden.

Die temperaturabhängige Ein- und Abschaltung der Heizelemente 73, 74, 75 wird nachfolgend anhand des Temperaturdiagramms von Fig. 2 erläutert.

Mit der Inbetriebnahme des Radfahrzeugs zum Zeitpunkt t = 0 werden die Heizelemente 73, 74, 75 eingeschaltet, da die über die Temperatursensoren 70, 71, 72 erfasste Öltemperatur T des zur Steuerung verwendeten Hydrauliköls unterhalb eines vorgegebenen Einschaltgrenzwertes T_{H_on} liegt (T < T_{H_on}). Die ABS-Steuerung ist zunächst deaktiviert, da die erfasste Öltemperatur T auch unterhalb eines vorgegebenen Betriebsgrenzwertes T_{ABS_on} liegt. Der Betriebsgrenzwert T_{ABS_on} der ABS-Steuerung liegt über einem Mindestgrenzwert T_{ABS_min} zur Erfüllung der gesetzlichen Anforderungen und unter dem Einschaltgrenzwert T_{H_on} der Heizelemente 73, 74, 75 (T_{ABS_min} < T_{ABS_on} < T_{H_on}). Durch den Abstand des Betriebsgrenzwertes T_{ABS_on} von dem Mindestgrenzwert T_{ABS_min} werden mögliche Messungenauigkeiten bei der sensorischen Erfassung der Öltemperatur T und eine mögliche ungleiche Temperaturverteilung innerhalb des ABS-Modulatorblocks 69 berücksichtigt, so dass die ABS-Steuerung im aktivierten Zustand die gesetzlichen Anforderungen sicher erfüllt.

Sofern die Öltemperatur T des Hydrauliköls den Betriebsgrenzwert T_{ABS_on} der ABS-Steuerung erreicht oder überschritten hat, wird die ABS-Steuerung aktiviert, wodurch die Brems- und Lenkfähigkeit des Radfahrzeugs deutlich verbessert wird. Sobald die Öltemperatur T des Hydrauliköls einen vorgegebenen Abschaltgrenzwert T_{H_off} der Heizelemente 73, 74, 75, der über dem Einschaltgrenzwert T_{H_on} liegt (T_{H_off} > T_{H_on}), erreicht oder überschritten hat (T ≥ T_{H_off}), werden die Heizelemente 73, 74, 75 abgeschaltet, sodass die Öltemperatur T des Hydrauliköls wieder sinkt. Wenn die Öltemperatur T des Hydrauliköls dann den Einschaltgrenzwert T_{H_on} der Heizelemente 73, 74, 75 erreicht oder unterschritten hat (T ≤ T_{H_on}), werden die Heizelemente 73, 74, 75 wieder eingeschaltet. Nachfolgend ergibt sich durch das Ab- und Einschalten der Heizelemente 73, 74, 75 ein sägezahnartiger Verlauf der Öltemperatur T, der zwischen dem Einschaltgrenzwert T_{H_on} und dem Abschaltgrenzwert T_{H_off} der Heizelemente 73, 74, 75 liegt.

Durch die beschriebene Aufheizung des zur Steuerung verwendeten Hydrauliköls wird bei einer Inbetriebnahme des Radfahrzeugs unter kalten Witterungsbedingungen relativ schnell eine hohe Schaltgeschwindigkeit der Ein- und Auslassventile 28, 30; 34, 36; 40, 42 der ABS-Steuerung und damit eine hohe ABS-Regelfrequenz erreicht sowie nachfolgend auf einem gleichbleibend hohen Niveau gehalten.

### Bezugszeichenliste (Bestandteil der Beschreibung)

- 1: Hydraulische Fremdkraftbremsanlage
- 2: Erster Bremskreis
- 3: Zweiter Bremskreis
- 4: Bremsventil
- 5: Erstes 3/3-Wege-Proportionalventil
- 6: Zweites 3/3-Wege-Proportionalventil
- 7: Bremspedal
- 8: Ventilanordnung
- 9: Erste Funktionsgruppe
- 10: Zweite Funktionsgruppe
- 11: Dritte Funktionsgruppe
- 12: Erste Radbremse, Trommelbremse
- 13: Erste Betätigungseinheit, Radbremszylinder
- 14: Zweite Radbremse, Trommelbremse
- 15: Zweite Betätigungseinheit, Radbremszylinder
- 16: Dritte Radbremse, Trommelbremse
- 17: Dritte Betätigungseinheit, Radbremszylinder
- 18: Vierte Radbremse, Trommelbremse
- 19: Vierte Betätigungseinheit, Radbremszylinder
- 20: Erste Hauptbremsleitung
- 21: Zweite Hauptbremsleitung
- 22: Erster Hauptbremsleitungszweig
- 23: Zweiter Hauptbremsleitungszweig
- 24: Druckölquelle
- 25: Hauptdruckleitung
- 26: Rücklaufleitung
- 27: Ölsumpf, Vorratsbehälter
- 28: Einlassventil, 2/2-Wege-Schaltventil
- 29: Steuereingang
- 30: Auslassventil, 2/2-Wege-Schaltventil
- 31: Steuereingang
- 32: Vorsteuerventil, 3/2-Wege-Magnetschaltventil
- 33: Vorsteuerventil, 3/2-Wege-Magnetschaltventil
- 34: Einlassventil, 2/2-Wege-Schaltventil
- 35: Steuereingang
- 36: Auslassventil, 2/2-Wege-Schaltventil
- 37: Steuereingang
- 38: Vorsteuerventil, 3/2-Wege-Magnetschaltventil
- 39: Vorsteuerventil, 3/2-Wege-Magnetschaltventil
- 40: Einlassventil, 2/2-Wege-Schaltventil
- 41: Steuereingang
- 42: Auslassventil, 2/2-Wege-Schaltventil
- 43: Steuereingang
- 44: Vorsteuerventil, 3/2-Wege-Magnetschaltventil
- 45: Vorsteuerventil, 3/2-Wege-Magnetschaltventil
- 46: Achsbremsleitung
- 47: Radbremsleitung
- 48: Radbremsleitung
- 49: Radbremsleitung
- 50: Radbremsleitung
- 51: Rücklaufleitung
- 52: Rücklaufleitung
- 53: Rücklaufleitung
- 54: Sammelrücklaufleitung
- 55: Ölsumpf, Vorratsbehälter
- 56: Haupt-Steuerdruckleitung
- 57: Steuerdruckleitung
- 58: Steuerdruckleitung
- 59: Steuerdruckleitung
- 60: Steuerdruckleitung
- 61: Steuerdruckleitung
- 62: Steuerdruckleitung
- 63: Rücklaufleitung
- 64: Rücklaufleitung
- 65: Rücklaufleitung
- 66: Rücklaufleitung
- 67: Rücklaufleitung
- 68: Rücklaufleitung
- 69: ABS-Modulatorblock
- 70: Temperatursensor
- 71: Temperatursensor
- 72: Temperatursensor
- 73: Heizelement
- 74: Heizelement
- 75: Heizelement
- cSt: Centistokes
- °C: Grad Celsius
- ν: kinematische Viskosität
- s: Sekunde
- t: Zeit, Zeitpunkt
- T: Öltemperatur
- T_{ABS_on}: Betriebsgrenzwert
- T_{ABS_min}: Mindestgrenzwert
- T_{H_off}: Abschaltgrenzwert
- T_{H_on}: Einschaltgrenzwert

## Patentansprüche

1. Hydraulische Fremdkraftbremsanlage (1 für ein Radfahrzeug, mit mindestens einer Hauptbremsleitung (20, 21), in die mittels eines über ein Bremspedal (7) betätigbaren Bremsventils (4) ein Soll-Bremsdruck einsteuerbar ist, und von der mindestens eine zu einer Betätigungseinheit (13, 15, 17, 19) wenigstens einer Radbremse (12, 14, 16, 18) führende Achs- oder Radbremsleitung (46, 49, 50) abzweigt, sowie mit einer Ventilanordnung (8) einer ABS-Steuerung, die jeweils ein zwischen der Hauptbremsleitung (20, 21) und der jeweiligen Achs- oder Radbremsleitung (46, 49, 50) angeordnetes, hydraulisch druckgesteuertes Einlassventil (28, 34, 40) und ein zwischen der jeweiligen Achs- oder Radbremsleitung (46, 49, 50) sowie einer drucklosen Rücklaufleitung (51, 52, 53) angeordnetes, hydraulisch druckgesteuertes Auslassventil (30, 36, 42) sowie mindestens ein jedem Ein- und Auslassventil (28, 30, 34, 36, 40, 42) vorgeschaltetes, elektromagnetisch betätigbares Vorsteuerventil (32, 33, 38, 39, 44, 45) aufweist, wobei mindestens ein Temperatursensor zur Erfassung der Öltemperatur (T) und mindestens ein Heizelement zur Aufheizung von Hydrauliköl vorgesehen ist, und wobei die Ein- und Auslassventile (28, 30, 34, 36, 40, 42) sowie die Vorsteuerventile (32, 33, 38, 39, 44, 45) der ABS-Steuerung pro Fahrzeugeinheit oder pro Fahrzeugachse jeweils in einem ABS-Modulatorblock (69) zusammengefasst sind, **dadurch gekennzeichnet, dass** in jedem ABS-Modulatorblock (69) mindestens ein Temperatursensor (70, 71, 72) zur Erfassung der Öltemperatur T und mindestens ein Heizelement (73, 74, 75) zur Aufheizung des lokal zur Steuerung verwendeten Hydrauliköls angeordnet sind.

2. Hydraulische Fremdkraftbremsanlage nach Anspruch 1, **dadurch gekennzeichnet, dass** der Temperatursensor (70, 71, 72) und das Heizelement (73, 74, 75) innerhalb des jeweiligen ABS-Modulatorblocks (69) nahe an den Vorsteuerventilen (32, 33, 38, 39, 44, 45) angeordnet sind.

3. Hydraulische Fremdkraftbremsanlage nach Anspruch 1 oder 2, **dadurch gekennzeichnet, dass** in mindestens einem ABS-Modulatorblock (69) für jedes Paar von Ein- und Auslassventilen (28, 30, 34, 36, 40, 42) der Achs- oder Radbremsleitungen (46, 49, 50) ein Temperatursensor (70, 71, 72) und ein Heizelement (73, 74, 75) nahe an den zugeordneten Vorsteuerventilen (32, 33, 38, 39, 44, 45) angeordnet sind.

4. Hydraulische Fremdkraftbremsanlage nach einem der Ansprüche 1 bis 3, **dadurch gekennzeichnet, dass** mindestens ein ABS-Modulatorblock (69) zumindest im Bereich der Vorsteuerventile (32, 33, 38, 39, 44, 45) mit einer gegen die Umgebung abschirmenden Wärmeisolierung versehen ist.

5. Hydraulische Fremdkraftbremsanlage nach einem der Ansprüche 1 bis 4, **dadurch gekennzeichnet, dass** mindestens ein Heizelement (73, 74, 75) als ein elektrischer Heizkörper ausgebildet ist, der über einen ansteuerbaren elektrischen Schalter wechselweise mit einer elektrischen Energiequelle des Radfahrzeugs verbindbar oder von dieser trennbar ist.

6. Hydraulische Fremdkraftbremsanlage nach einem der Ansprüche 1 bis 4, **dadurch gekennzeichnet, dass** mindestens ein Heizelement (73, 74, 75) als ein elektrischer Heizkörper ausgebildet ist, welcher über einen in einem oder an einem Vorsteuerventil (32, 33; 38, 39; 44, 45) integrierten Bi-Metall-Schalter in Abhängigkeit von der dort herrschenden Temperatur selbststeuernd wechselweise mit einer elektrischen Energiequelle des Radfahrzeugs verbindbar oder von dieser trennbar ist.

7. Hydraulische Fremdkraftbremsanlage nach einem der Ansprüche 1 bis 5, **dadurch gekennzeichnet, dass** mindestens ein Heizelement (73, 74, 75) als ein Öl-Wärmetauscher ausgebildet ist, der über ein im Zu- oder Rücklauf angeordnetes ansteuerbares Magnetventil wechselweise mit einem Kühlölkreislauf einer Ölpumpe einer hydraulischen Druckversorgungsanlage oder eines Verbrennungsmotors oder eines Fahr- oder Arbeitsgetriebes des Radfahrzeugs verbindbar oder gegenüber diesem absperrbar ist.

8. Hydraulische Fremdkraftbremsanlage nach einem der Ansprüche 1 bis 5, **dadurch gekennzeichnet, dass** mindestens ein Heizelement (73, 74, 75) als ein Wasser-Wärmetauscher ausgebildet ist, der über ein im Zu- oder Rücklauf angeordnetes ansteuerbares Magnetventil wechselweise mit einem Kühlwasserkreislauf eines Verbrennungsmotors des Radfahrzeugs verbindbar oder gegenüber diesem absperrbar ist.

9. Verfahren zur ABS-Steuerung einer hydraulischen Fremdkraftbremsanlage (1) eines Radfahrzeugs, aufweisend mindestens eine Hauptbremsleitung (20, 21), in die mittels eines über ein Bremspedal (7) betätigbaren Bremsventils (4) ein Soll-Bremsdruck einsteuerbar ist, und von der mindestens eine zu einer Betätigungseinheit (13, 15, 17, 19) wenigstens einer Radbremse (12, 14, 16, 18) führende Achs- oder Radbremsleitung (46, 49, 50) abzweigt, sowie aufweisend eine Ventilanordnung (8) einer ABS-Steuerung, die jeweils ein zwischen der Hauptbremsleitung (20, 21) und der jeweiligen Achs- oder Radbremsleitung (46, 49, 50) angeordnetes, hydraulisch druckgesteuertes Einlassventil (28, 34, 40) und ein zwischen der jeweiligen Achs- oder Radbremsleitung (46, 49, 50) und einer drucklosen Rücklaufleitung (51, 52, 53) angeordnetes, hydraulisch druckgesteuertes Auslassventil (30, 36, 42), sowie aufweisend mindestens ein jedem Ein- und Auslassventil (28, 30, 34, 36, 40, 42) vorgeschaltetes, elektromagnetisch betätigbares Vorsteuerventil (32, 33, 38, 39, 44, 45), und mit mindestens einem Temperatursensor (70, 71, 72) zur Erfassung der Öltemperatur T und ein Heizelement (73, 74, 75) zur Aufheizung von Hydrauliköl, **dadurch gekennzeichnet, dass** mittels mindestens einem nahe an den Vorsteuerventilen (32, 33, 38, 39, 44, 45) wenigstens eines Paares von Ein- und Auslassventilen (28, 30, 34, 36, 40, 42) einer Achs- oder Radbremsleitung (46, 49, 50) angeordneten Temperatursensor (73, 74, 75) die lokale Öltemperatur (T) des zur Ansteuerung der Ein- und Auslassventile (28, 30, 34, 36, 40, 42) verwendeten Hydrauliköls gemessen wird, und dass mindestens ein nahe an denselben Vorsteuerventilen (32, 33, 38, 39, 44, 45) angeordnetes Heizelement (73, 74, 75) dann eingeschaltet wird, wenn die erfasste Öltemperatur (T) einen vorgegebenen Einschaltgrenzwert T_{H_on} erreicht oder unterschritten hat, und dann abgeschaltet wird, wenn die erfasste Öltemperatur (T) einen vorgegebenen Abschaltgrenzwert T_{H_off}, der über dem Einschaltgrenzwert T_{H_on} liegt, erreicht oder überschritten hat.

10. Verfahren zur ABS-Steuerung nach Anspruch 9, **dadurch gekennzeichnet, dass** die ABS-Steuerung deaktiviert wird, wenn die erfasste Öltemperatur (T) einen vorgegebenen Betriebsgrenzwert T_{ABS_on}, der über einem Mindestgrenzwert T_{ABS_min} zur Erfüllung der gesetzlichen Anforderungen an die ABS-Steuerung (T_{ABS_on} > T_{ABS_min}) und unter dem Einschaltgrenzwert T_{H_on} des Heizelementes liegt (T_{ABS_n} < T_{H_on}), erreicht oder unterschritten hat (T ≤ T_{ABS_on}).

11. Verfahren zur ABS-Steuerung nach Anspruch 10, **dadurch gekennzeichnet, dass** bei deaktivierter ABS-Steuerung ein optisches und/oder akustisches Warnsignal im Fahrerhaus des Radfahrzeugs ausgegeben wird.

## Claims

1. Hydraulic power brake system (1) for a wheeled vehicle, with at least one main brake line (20, 21), in which a setpoint brake pressure can be controlled by means of a brake valve (4) that is operated by means of a brake pedal (7), and from which at least one axle brake line or wheel brake line (46, 49, 50) leading to an actuating unit (13, 15, 17, 19) of at least one wheel brake (12, 14, 16, 18) branches off, and with a valve arrangement (8) of an ABS control system, which comprises respectively a hydraulic pressure-controlled inlet valve (28, 34, 40) disposed between the main brake line (20, 21) and the respective axle brake line or wheel brake line (46, 49, 50), and a hydraulic pressure-controlled outlet valve (30, 36, 42) disposed between the respective axle brake line or wheel brake line (46, 49, 50) and an unpressurised return line (51, 52, 53), and at least one electromagnetically operated pilot control valve (32, 33, 38, 39, 44, 45) connected upstream of each inlet valve and outlet valve (28, 30, 34, 36, 40, 42), wherein at least one temperature sensor for detecting the oil temperature (T) and at least one heating element for heating the hydraulic oil are provided, and wherein the inlet valves and outlet valves (28, 30, 34, 36, 40, 42) and the pilot control valves (32, 33, 38, 39, 44, 45) of the ABS control system for each vehicle unit or for each vehicle axle are disposed together in each case in an ABS modulator block (69), wherein at least one temperature sensor (70, 71, 72) for detecting the oil temperature T and at least one heating element (73, 74, 75) for heating the local hydraulic oil that is used for control are disposed in each ABS modulator block (69).

2. Hydraulic power brake system according to Claim 1, **characterized in that** the temperature sensor (70, 71, 72) and the heating element (73, 74, 75) are disposed close to the pilot control valves (32, 33, 38, 39, 44, 45) within the respective ABS modulator block (69).

3. Hydraulic power brake system according to Claim 1 or 2, **characterized in that** in at least one ABS modulator block (69) a temperature sensor (70, 71, 72) and a heating element (73, 74, 75) are disposed close to the associated pilot control valves (32, 33, 38, 39, 44, 45) for each pair of inlet valves and outlet valves (28, 30, 34, 36, 40, 42) of the axle brake lines or wheel brake lines (46, 49, 50).

4. Hydraulic power brake system according to any one of Claims 1 through 3, **characterized in that** at least one ABS modulator block (69) is provided with thermal insulation shielding against the surroundings, at least in the vicinity of the pilot control valves (32, 33, 38, 39, 44, 45).

5. Hydraulic power brake system according to any one of Claims 1 through 4, **characterized in that** at least one heating element (73, 74, 75) is embodied as an electrical heating body, which can be alternately connected to or disconnected from an electrical power supply of the wheeled vehicle by means of an actuatable electrical switch.

6. Hydraulic power brake system according to any one of Claims 1 through 4, **characterized in that** at least one heating element (73, 74, 75) is embodied as an electrical heating body that can be alternately connected to or disconnected from an electrical power supply of the wheeled vehicle in a self-controlling manner by means of a bimetallic switch that is integrated within or on a pilot control valve (32, 33; 38, 39; 44, 45) depending on the temperature prevailing there.

7. Hydraulic power brake system according to any one of Claims 1 through 5, **characterized in that** at least one heating element (73, 74, 75) is embodied as an oil heat exchanger that is alternately connected to or disconnected from a cooling oil circuit of an oil pump of a hydraulic pressure supply system or a combustion engine or a driving gearbox or a working gearbox of the wheeled vehicle by means of an actuatable solenoid valve that is disposed in the feed or return.

8. Hydraulic power brake system according to any one of Claims 1 through 5, **characterized in that** at least one heating element (73, 74, 75) is embodied as a water heat exchanger that is alternately connected to or disconnected from a cooling water circuit of a combustion engine of the wheeled vehicle by means of an actuatable solenoid valve that is disposed in the feed or return.

9. Method for ABS control of a hydraulic power brake system (1) of a wheeled vehicle, comprising at least one main brake line (20, 21), in which a setpoint brake pressure can be controlled by means of a brake valve (4) that is operated by means of a brake pedal (7), and from which at least one axle brake line or wheel brake line (46, 49, 50) leading to an actuating unit (13, 15, 17, 19) of at least one wheel brake (12, 14, 16, 18) branches off, and comprising a valve arrangement (8) of an ABS control system with a hydraulic pressure-controlled inlet valve (28, 34, 40) disposed between the main brake line (20, 21) and the respective axle brake line or wheel brake line (46, 49, 50) and a hydraulic pressure-controlled outlet valve (30, 36, 42) disposed between the respective axle brake line or wheel brake line (46, 49, 50) and an unpressurised return line (51, 52, 53), and comprising at least one electromagnetically operated pilot control valve (32, 33, 38, 39, 44, 45) connected upstream of each inlet valve and outlet valve (28, 30, 34, 36, 40, 42), and with at least one temperature sensor (70, 71, 72) for detecting the oil temperature T and a heating element (73, 74, 75) for heating hydraulic oil, **characterized in that** the local oil temperature (T) of the hydraulic oil that is used for actuation of the inlet valves and outlet valves (28, 30, 34, 36, 40, 42) is measured by means of at least one temperature sensor (73, 74, 75) disposed close to the pilot control valves (32, 33, 38, 39, 44, 45) of at least one pair of inlet valves and outlet valves (28, 30, 34, 36, 40, 42) of an axle brake line or wheel brake line (46, 49, 50), and that at least one heating element (73, 74, 75) disposed close to the same pilot control valves (32, 33, 38, 39, 44, 45) is switched on if the detected oil temperature (T) has reached or fallen below a specified switch-on limit value T_{H_on}, and is then switched off if the detected oil temperature (T) has reached or exceeded a specified switch-off limit value T_{H_off} that is greater than the switch-on limit value T_{H_on}.

10. Method for ABS control according to Claim 9, **characterized in that** the ABS control system is deactivated if the detected oil temperature (T) has reached or fallen below a specified operating limit value T_{ABS_on} that is greater than a minimum limit value T_{ABS_min} for satisfying the legal requirements on the ABS control system (T_{ABS_on} > T_{ABS_min}) and that is less than the switch-on limit value T_{H_on} of the heating element (T_{ABS_on} < T_{H_on}), (T ≤ T_{ABS_on}).

11. Method for ABS control system according to Claim 10, **characterized in that** with the ABS control system deactivated, a visible and/or audible warning signal is output in the driver's cab of the wheeled vehicle.

## Revendications

1. Système hydraulique de freinage actionné par une force extérieure (1) pour un véhicule à roues, comprenant au moins une conduite de frein principale (20, 21) dans laquelle une pression de freinage de consigne peut être régulée au moyen d'une soupape de frein (4) pouvant être actionnée par le biais d'une pédale de frein (7), et à partir de laquelle bifurque au moins une conduite de frein d'essieu ou de roue (46, 49, 50) menant jusqu'à une unité d'actionnement (13, 15, 17, 19) d'au moins un frein de roue (12, 14, 16, 18), et comprenant un ensemble de soupape (8) d'une commande d'ABS qui comprend respectivement une soupape d'admission (28, 34, 40) commandée par pression hydrauliquement et disposée entre la conduite de frein principale (20, 21) et la conduite de frein d'essieu ou de roue (46, 49, 50) respective et une soupape de sortie (30, 36, 42) commandée par pression hydrauliquement et disposée entre la conduite de frein d'essieu ou de roue (46, 49, 50) respective et une conduite de retour (51, 52, 53) sans pression, ainsi qu'au moins une soupape pilote (32, 33, 38, 39, 44, 45) pouvant être actionnée de manière électromagnétique et montée en amont de chaque soupape d'admission et de sortie (28, 30, 34, 36, 40, 42), dans lequel au moins un capteur de température servant à la détection de la température d'huile (T) et au moins un élément chauffant servant au chauffage de l'huile hydraulique sont prévus, et dans lequel les soupapes d'admission et de sortie (28, 30, 34, 36, 40, 42) ainsi que les soupapes pilotes (32, 33, 38, 39, 44, 45) de la commande d'ABS sont rassemblées pour chaque unité de véhicule ou pour chaque essieu de véhicule respectivement dans un bloc de modulateur ABS (69), **caractérisé en ce qu'**au moins un capteur de température (70, 71, 72) servant à la détection de la température d'huile T et au moins un élément chauffant (73, 74, 75) servant au chauffage de l'huile hydraulique utilisée localement pour la commande sont disposés dans chaque bloc de modulateur ABS (69).

2. Système hydraulique de freinage actionné par une force extérieure selon la revendication 1, **caractérisé en ce que** le capteur de température (70, 71, 72) et l'élément chauffant (73, 74, 75) sont disposés près des soupapes pilotes (32, 33, 38, 39, 44, 45) à l'intérieur du bloc de modulateur ABS (69) respectif.

3. Système hydraulique de freinage actionné par une force extérieure selon la revendication 1 ou 2, **caractérisé en ce qu'**un capteur de température (70, 71, 72) et un élément chauffant (73, 74, 75) sont disposés près des soupapes pilotes (32, 33, 38, 39, 44, 45) associées dans au moins un bloc de modulateur ABS (69) pour chaque paire de soupapes d'admission et de sortie (28, 30, 34, 36, 40, 42) des conduites de frein d'essieu ou de roue (46, 49, 50).

4. Système hydraulique de freinage actionné par une force extérieure selon l'une des revendications 1 à 3, **caractérisé en ce qu'**au moins un bloc de modulateur ABS (69) est, au moins dans la région des soupapes pilotes (32, 33, 38, 39, 44, 45), doté d'une isolation thermique protégeant contre l'environnement.

5. Système hydraulique de freinage actionné par une force extérieure selon l'une des revendications 1 à 4, **caractérisé en ce qu'**au moins un élément chauffant (73, 74, 75) est réalisé sous forme de corps chauffant électrique qui peut être sélectivement relié à une source d'énergie électrique du véhicule à roues ou séparé de celle-ci par le biais d'un commutateur électrique pouvant être commandé.

6. Système hydraulique de freinage actionné par une force extérieure selon l'une des revendications 1 à 4, **caractérisé en ce qu'**au moins un élément chauffant (73, 74, 75) est réalisé sous forme de corps chauffant électrique qui peut être sélectivement relié à une source d'énergie électrique du véhicule à roues ou séparé de celle-ci par le biais d'un commutateur bimétallique intégré dans ou sur une soupape pilote (32, 33 ; 38, 39 ; 44, 45) de manière commandée automatiquement en fonction de la température qui y règne.

7. Système hydraulique de freinage actionné par une force extérieure selon l'une des revendications 1 à 5, **caractérisé en ce qu'**au moins un élément chauffant (73, 74, 75) est réalisé sous forme d'échangeur thermique à huile qui, par le biais d'une électrovanne pouvant être commandée disposée dans l'alimentation ou le retour, peut sélectivement être relié à un circuit d'huile de refroidissement d'une pompe à huile d'un système hydraulique d'alimentation en pression ou d'un moteur à combustion interne ou d'un entraînement de conduite ou de travail du véhicule à roues ou être fermé par rapport à ce circuit.

8. Système hydraulique de freinage actionné par une force extérieure selon l'une des revendications 1 à 5, **caractérisé en ce qu'**au moins un élément chauffant (73, 74, 75) est réalisé sous forme d'échangeur thermique à eau qui, par le biais d'une électrovanne pouvant être commandée disposée dans l'alimentation ou le retour, peut sélectivement être relié à un circuit d'eau de refroidissement d'un moteur à combustion interne du véhicule à roues ou être fermé par rapport à ce circuit.

9. Procédé de commande d'ABS d'un système hydraulique de freinage actionné par une force extérieure (1) d'un véhicule à roues, comprenant au moins une conduite de frein principale (20, 21) dans laquelle une pression de freinage de consigne peut être régulée au moyen d'une soupape de frein (4) pouvant être actionnée par le biais d'une pédale de frein (7), et à partir de laquelle bifurque au moins une conduite de frein d'essieu ou de roue (46, 49, 50) menant jusqu'à une unité d'actionnement (13, 15, 17, 19) d'au moins un frein de roue (12, 14, 16, 18), et comprenant un ensemble de soupape (8) d'une commande d'ABS qui comprend respectivement une soupape d'admission (28, 34, 40) commandée par pression hydrauliquement et disposée entre la conduite de frein principale (20, 21) et la conduite de frein d'essieu ou de roue (46, 49, 50) respective et une soupape de sortie (30, 36, 42) commandée par pression hydrauliquement et disposée entre la conduite de frein d'essieu ou de roue (46, 49, 50) respective et une conduite de retour (51, 52, 53) sans pression, ainsi qu'au moins une soupape pilote (32, 33, 38, 39, 44, 45) pouvant être actionnée de manière électromagnétique et montée en amont de chaque soupape d'admission et de sortie (28, 30, 34, 36, 40, 42), et comprenant au moins un capteur de température (70, 71, 72) servant à la détection de la température d'huile (T) et un élément chauffant (73, 74, 75) servant au chauffage de l'huile hydraulique, **caractérisé en ce que** la température d'huile (T) locale de l'huile hydraulique utilisée pour la commande des soupapes d'admission et de sortie (28, 30, 34, 36, 40, 42) est mesurée au moyen d'au moins un capteur de température (73, 74, 75) disposé près des soupapes pilotes (32, 33, 38, 39, 44, 45) d'au moins une paire de soupapes d'admission et de sortie (28, 30, 34, 36, 40, 42) d'une conduite de frein d'essieu ou de roue (46, 49, 50), et **en ce qu'**au moins un élément chauffant (73, 74, 75) disposé près des mêmes soupapes pilotes (32, 33, 38, 39, 44, 45) est connecté lorsque la température d'huile (T) détectée a atteint une valeur limite de connexion T_{H_on} prédéfinie ou est passée en dessous de celle-ci, puis est déconnecté lorsque la température d'huile (T) détectée a atteint ou dépassé une valeur limite de déconnexion T_{H_off} prédéfinie qui est supérieure à la valeur limite de connexion T_{H_on.}

10. Procédé de commande d'ABS selon la revendication 9, **caractérisé en ce que** la commande d'ABS est désactivée lorsque la température d'huile (T) détectée a atteint une valeur limite de fonctionnement T_{ABS_on} prédéfinie ou est passée en dessous de celle-ci (T ≤ T_{ABS_on}), laquelle est supérieure à une valeur limite minimale T_{ABS_min} pour satisfaire aux exigences légales relatives à la commande d'ABS (T_{ABS_on} > T_{ABS_min}) et inférieure à la valeur limite de connexion T_{H_on} de l'élément chauffant (T_{ABS_on} < T_{H_on}).

11. Procédé de commande d'ABS selon la revendication 10, **caractérisé en ce que** lorsque la commande d'ABS est désactivée, un signal d'avertissement optique et/ou acoustique est délivré dans la cabine de conducteur du véhicule à roues.
